(19) Europäisches Patentamt

European Patent Office

Office européen des brevets

(11) Veröffentlichungsnummer: **0 215 772 B1**

(12) **EUROPÄISCHE PATENTSCHRIFT**

(45) Veröffentlichungstag der Patentschrift: **01.07.92**

(21) Anmeldenummer: **86890254.5**

(22) Anmeldetag: **09.09.86**

(51) Int. Cl.⁵: **G01N 33/49**, G01N 21/64

(54) Verfahren und Vorrichtung zur Tumordiagnose mittels Sera.

(30) Priorität: **16.09.85 AT 2703/85**

(43) Veröffentlichungstag der Anmeldung:
**25.03.87 Patentblatt 87/13**

(45) Bekanntmachung des Hinweises auf die
Patenterteilung:
**01.07.92 Patentblatt 92/27**

(84) Benannte Vertragsstaaten:
**DE FR GB IT**

(56) Entgegenhaltungen:
**DE-A- 2 813 317**
**FR-A- 2 229 063**

**BIOLOGICAL ABSTRACTS, Band 63, 1977,**
**Philadelphia, PA (US); V.I.FIRSOVA et al., Nr.**
**63027733**

**OPTICAL ENGINEERING, Band 22, Nr. 5,**
**September-Oktober 1983, Bellingham, WA**
**(US); G.YAO-JUN, Seiten 596-601**

**DIE PHARMAZIE, Band 37, Nr. 5, Mai 1982,**
**Ost-Berlin (DDR); W.SCHWARZE et al., Seiten**
**323-343**

**TRENDS IN ANAYLICAL CHEMISTRY, Band 4,**

**Nr. 7, August 1985, Amsterdam (NL);**
**O.S.WOLFBEIS, Seiten 184-188**

**TRENDS IN ANAYLICAL CHEMISTRY, Band 5,**
**Nr. 2, Februar 1986, Amsterdam (NL); C.NAI**
**et al., Seiten 37-43**

**BIOLOGICAL ABSTRACTS/RRM, Band 27,**
**1984, Philadelphia, PA (US); CHARNITSKI YA.**
**et al., Nr. 27055866**

**MOSC. ONCOLOGY RES., 25 Dezember 1975;**
**Nr. 07/89 B/04**

(73) Patentinhaber: **AVL Medical Instruments AG**
**Stettemerstrasse 28**
**CH-8207 Schaffhausen(CH)**

(72) Erfinder: **Leiner, Marc, Dr.**
**3, rue de Stavelot**
**L-Heinerscheid(LU)**
Erfinder: **Schaur, Rudolf Jörg, Dr.**
**A. Schnitzler-Gasse 4**
**A-8045 Graz(AT)**

(74) Vertreter: **Krause, Walter, Dr. Dipl.-Ing. et al**
**Postfach 200 Singerstrasse 8**
**A-1010 Wien(AT)**

## Beschreibung

Die Erfindung betrifft ein Verfahren zur Tumordiagnose mittels Sera, wobei das zu untersuchende Serum in-vitro mit Anregungsstrahlung beaufschlagt und die Fluoreszenzintensität des Serums gemessen wird.

Das beträchtliche Interesse, das an einer frühzeitigen und sicheren Tumordiagnose zur Zeit besteht, hat dazu geführt, daß verschiedenste Untersuchungsmethoden hinsichtlich ihrer Eignung zur Tumordiagnose geprüft worden sind. Dabei ist die Suche nach Tumoren in verschiedenen Gewebsteilen oder Organen recht aufwendig, da in diesem Fall eine Vielzahl von Proben zu nehmen ist, wobei die Gewinnung von Zellproben von schwer zugänglichen Organen eine nicht unwesentliche Hürde bei der Früherkennung von Tumoren im Rahmen der Gesundenuntersuchungen bildet. Gerade für den letztgenannten Zweck sind direkte Untersuchungen des Serums allen anderen Methoden vorzuziehen.

Besondere Aufmerksamkeit hat dabei die Untersuchung des Humanserums gefunden, dessen Probennahme zur Routine in der klinischen Analytik gehört und welches somit von sehr vielen Personen leicht und in kurzer Zeit erhalten werden kann. Dies ist für Screening-Untersuchungen von besonderer Wichtigkeit.

Eine bedeutende Rolle bei der Diagnose von Malignomen über Serumtests spielen die sogenannten Tumormarker. Dabei handelt es sich um Parameter, die Hinweis auf einen neoplastischen Prozeß geben können. Bei den bekannten relativ aufwendigen Verfahren zur Tunmordiagnose werden dabei vor allen) immunologische Methoden angewandt.

Aus BIOLOGICAL ABSTRACTS, Band 63, 1977 Abstract no. 63 027 733, Philadelphia, US, V.I. FIRSOVA et al. ist es bekannt, Rattenserum fluoreszenzoptisch zu untersuchen. Bei neoplastischen Seren wird ein Ansteigen der Gesamtfluoreszenz in einer Größenordnung von 19 bis 41% beobachtet. Weiters wird bei Vorliegen von Tumoren eine Abnahme der Gesamtfluoreszenz im stark sauren bzw. stark alkalischen Bereich festgestellt. Die Methode eignet sich jedoch nur als zusätzlicher Test, um neoplastische Erkrankungen zu diagnostizieren.

Eine aus DE-A 2 813 317 bekannte Krebsdiagnose-Vorrichtung funktioniert lediglich für ein Gemisch aus Lymphzellen plus Protein aus Krebszellen eines Patienten. Die genannte Vorrichtung nach DE-A 2 813 317, mit welcher der Polarisationsgrad der Fluoreszenz gemessen wird, ist nicht geeignet ein Serum zu vermessen. Nachteiliger Weise erfordert diese bekannte Vorrichtung einen Polarisator und einen Analysator, weiters muß die Probe vor der Messung eingefärbt werden.

In MOSC ONCOLOGY RES., Abstract 0 71 89 B/04; 25 12-75-SU-300 956 wird ein Verfahren zur Tumordiagnose beschrieben, in welchem eine Plasmaprobe in geringer Verdünnung 12 Minuten mit UV-Licht bestrahlt wird. Die Lichtquelle wird ausgeschaltet und das Nachleuchten über einen Zeitraum von 1,5 Minuten beobachtet. Es handelt sich dabei um ein Meßverfahren beruhend auf Phosphoreszenz oder Chemi-Lumineszenz.

Aus DIE PHARMAZIE, Band 37, Nr. 5, Mai 1982, Seiten 323-343, Ost-Berlin DDR, W.SCHWARZE et al. ist eine Übersicht über Grundlagen der Fluoreszenz und deren experimentellen Methoden bekannt. Die Anwendungen sind jedoch auf Fluoreszenzmarkierung mit Reagenzien beschränkt und betreffen nicht die Eigenfluoreszenz des Serums.

Schließlich ist es aus OPTICAL ENGINEERING, Band 22, Nr. 5, September-Oktober 1983, Seiten 596-601, Bellingham, Washington, US, G. YAO-JUN bekannt, daß die Fluoreszenz der natürlichen Proteine auf aromatische Aminosäuren zurückzuführen ist.

Aufgabe der Erfindung ist es, ein Verfahren zur Tumordiagnose anzugeben, mit welchem in einfacher Weise und mit relativ großer Genauigkeit die Differenzierung zwischen Normalsera und Tumorsera möglich ist.

Diese Aufgabe wird erfindungsgemäß dadurch gelöst, daß Anregungsstrahlung zumindest einer Wellenlänge zwischen 250 und 300 nm verwendet wird, daß die Fluoreszenzintensität bei vorbestimmten Emissionswellenlängen gemessen wird, sowie daß Abweichungen dieser Meßwerte von jenen eines Standards oder Standardserums festgestellt werden und daraus auf das Vorliegen neoplastischer Erkrankungen geschlossen wird. Damit steht ein neuartiges spektroskopisches Verfahren zur Tumordiagnose zur Verfügung, wobei der Umstand ausgenützt wird, daß sich die emissionsoptischen Eigenschaften eines Normalserums in geringer, aber eindeutiger Weise von denen eines Tumorserums unterscheiden. Das Fluoreszenzspektrum des Normalserums zeigt ein Emissionsmaximum bei ca. 337 nm, welches überwiegend von proteingebundenem Tryptophan (Trp) herrührt.

In einer Ausgestaltung der Erfindung ist vorgesehen, daß die Fluoreszenzintensität des zu untersuchenden Serums bei einer Emissionswellenlänge von über 340 nm gemessen, normiert und mit der Fluoreszenzintensität eines Standards oder Standardserums verglichen wird und daß aus einer Abnahme der normierten Fluoreszenzintensität auf das Vorliegen neoplastischer Erkrankungen geschlossen wird. Die Normierung der Spektren kann dabei beispielsweise auf deren Peak-Maximum bezogen werden. Es zeigt sich somit, daß sich die Fluoreszenzspektren des Humanserums beim Auftreten neoplastischer Erkrankungen in ganz charakteristischer Weise verändern. Diese Veränderungen treten beispielsweise auf der langwelligen Flanke des Spektrums auf, wo sie besonders gut ausgeprägt sind.

Um eine Abweichung von der normalen spektralen Verteilung der Fluoreszenz festzustellen, ist es nicht ausreichend; nur die Fluoreszenzintensität zu bestimmen, da deren absolute Intensität von Serum zu Serum schwankt. Um solche Schwankungen auszuschalten, ist es zweckmäßig, die Fluoreszenzintensität zu normieren, indem sie zur Intensität am Emissionsmaximum des Spektrums in Beziehung gesetzt wird. Zu diesem Zweck bestimmt man die Fluoreszenzintensität $I_o$ des verdünnten Humanserums am Emissionsmaximum, also bei ca. 337 nm. In einer zweiten Messung bestimmt man die Fluoreszenzintensität $I_x$ an der langwelligen Flanke des Emissionsspektrums, also im Bereich zwischen 350 und 400 nm bei einer Anregungswellenlänge von 250 bis 300 nm, typischerweise bei 287 nm. Der Quotient der beiden Intensitäten ($I_x/I_o$) muß bei einem gesunden Probanden einen gewissen Mindestwert erreichen. Falls dieser Wert unterschritten wird, ist dies indikativ für einen Tumor. Dieser Mindestwert wird durch Eichung mit einem Standard ermittelt. Das kann z.B. ein gemittelter Wert aus mehreren Sera gesunder Personen sein oder ein synthetischer Standard, wie z.B. N-Acetyl-Tryptophanamid.

Bei Sera von Patienten mit krebsartigen Erkrankungen wurden Abweichungen der Intensitätsverhältnisse bis zu einem Verhältnis von 0,636 gefunden, wobei im Normalfall ein Verhältnis von 0,714 festgestellt wird. Auf alle Fälle ist vor jeder Meßreihe eine sorgfältige Geräteeichung vorzunehmen. Mit Hilfe der Messung bei zwei Emissionswellenlängen (Zwei-Wellenlängenmessung) ist eine Trefferwahrscheinlichkeit von maximal 60 % für die Erkennung der malignen Erkrankung erzielbar. Bemerkenswert ist dabei der Umstand, daß keine falsche positive Anzeige beobachtet wurde.

Die Durchführung des Verfahrens mittels der Zwei-Wellenlängenmessung ist einfacher und schneller als die Aufnahme eines gesamten Emissionsspektrums und anschließender Subtraktion von einem gespeicherten Standard-Normal-Serum, oder auch der Bildung eines Verhältnisses $I_x/I_o$ aus den Daten des gesamten Emissionsspektrums. Dies ist ein wesentlicher Vorteil beim Einsatz im Rahmen von Screening-Untersuchungen.

In einer Weiterbildung der Erfindung ist vorgesehen, daß die Fluoreszenzintensität des zu untersuchenden Serums zusätzlich bei einer Emissionswellenlänge zwischen 320 und 330 nm gemessen, normiert und mit der Fluoreszenzintensität eines Standardserums verglichen wird und daß aus der Zunahme der normierten Fluoreszenzintensität auf das Vorliegen neoplastischer Erkrankungen geschlossen wird. Durch die Einbeziehung der kurzwelligen Flanke des Spektrums und die Messung der Intensitätsänderungen in diesem Bereich kann die Genauigkeit des Verfahrens weiter erhöht werden. Die Trefferwahrscheinlichkeit kann mit Hilfe der Drei-Wellenlängenmessung, durch die zusätzliche Messung der Fluoreszenzintensität $I_y$ im kurzwelligen Bereich des Spektrums, wesentlich gesteigert werden.

Während nun das Verhältnis $I_x/I_o$ bei Sera gesunder Personen nur einen gewissen Mindestwert und gleichzeitig das Verhältnis $I_y/I_o$ einen gewissen Maximalwert erreichen dürfen, werden diese Werte bei Sera von Patienten mit neoplastischen Erkrankungen unter- bzw. überschritten.

In einer anderen Ausgestaltung der Erfindung ist vorgesehen, daß die Fluoreszenzintensität des zu untersuchenden Serums sowohl in physiologischer als auch in saurer Lösung von pH-Werten unter 4 gemessen und normiert wird und daß aus der Differenz oder dem Verhältnis der normierten Meßwerte auf das Vorliegen neoplastischer Erkrankungen geschlossen wird. Ein weiterer Unterschied in den fluoreszenz-optischen Eigenschaften der Sera gesunder bzw. tumorkranker Personen wurde beim Studium der pH-Abhängigkeit der entsprechenden Fluoreszenzeigenschaften gefunden. Das Emissionsmaximum des Humanserums gesunder Personen liegt, mit nur sehr geringen Abweichungen, zwischen 336,5 und 337,5 nm (gemessen an einem Aminco SPF 500 Instrument). Im Vergleich dazu ist das Emissionsmaximum von Tumorsera zu etwas kürzeren Wellenlängen verschoben. Dies gilt für pH-Werte im physiologischen Bereich.

Mißt man hingegen in stark saurer Lösung, z.B. in 0,1-molarer Salzsäure, so tritt beim Normalserum eine Blauverschiebung des Emissionsmaximums gegenüber dem physiologischen Bereich auf, während dieses beim Tumorserum nur schwach oder gar nicht verschoben wird, sodaß in stark saurer Lösung das Emissionsmaximum der Tumorsera gegenüber demjenigen der Normalsera zu etwas längeren Wellenlängen verschoben ist.

In stark saurer Lösung ist also das Trp-Emissionsmaximum der Sera von Patienten mit Malignomen gegenüber solchen gesunder Personen rotverschoben. Sämtliche im physiologischen pH-Bereich beobachteten Abweichungen ändern in saurer Lösung lediglich das Vorzeichen. Somit können bei Messungen im sauren pH-Bereich sämtliche Meßverfahren, wie sie oben beschrieben sind, auch im sauren Bereich angewendet werden. Bei der Messung im sauren pH-Bereich gelten allerdings andere Quotienten der Fluoreszenzintensitäten. Ebenso wie im neutralen pH-Bereich muß im sauren pH-Bereich der Mittelwert der einzelnen Quotienten durch arithmetische Mittelung einer gewissen Anzahl von Quotienten von Sera gesunder Personen oder mit Hilfe eines Standards bestimmt und der Normalbereich ermittelt werden.

Das zuletzt beschriebene Meßverfahren hat den Vorteil, daß bei gleichzeitiger Messung bei physiologischem bzw. stark saurem pH-Wert - zur Bestimmung der Normalbereiche der Quotienten - keine große Anzahl von Kontrollsera vermessen werden muß. Es werden lediglich im physiologischen Bereich die Intensitäten $I_o$ bzw. $I_x$, sowie im sauren Bereich $I_o'$ und $I_x'$ gemessen. Die Differenz der Quotienten $I_x'$ / $I_o'$ minus $I_x/I_o$ ergibt bei Sera gesunder Personen im langwelligen Bereich einen negativen Wert. Ist dieser Wert positiv, ist dies indikativ für einen Tumor. Bei Kenntnis obiger Tatsache, ist das Meßverfahren somit unabhängig von der genauen Lage des Normalbereiches der Quotienten, womit auch keine Eichung mittels Standardnormalserum erforderlich ist.

Als weitere Variante der Erfindung stellt sich die Möglichkeit dar, daß die Fluoreszenzintensität des zu untersuchenden Serums bei mindestens einer Emissionswellenlänge in Gegenwart und in Abwesenheit eines dynamischen Fluoreszenzlöschers bestimmt wird und daß aus der Differenz oder dem Verhältnis auf das Vorliegen neoplastischer Erkrankungen geschlossen wird. Die Fluoreszenzlöschung gehorcht dabei üblicherweise der Stern-Volmer-Beziehung:

$$I_o/I_L = 1 + K_{sv} \cdot (L) \text{ (Stern-Volmer-Gleichung)}$$

Hier bedeuten $I_o$ die Fluoreszenz des Trp in Abwesenheit eines Löschers, $I_L$ die Intensität in Anwesenheit einer Konzentration (L) an Löscher und $K_{sv}$ die Löschkonstante.

Es wird nun gefunden, daß sich die Fluoreszenz des Serums gesunder Personen durch Verwendung einer geeigneten Löschsubstanz deutlich stärker Löschen läßt als die Fluoreszenz des Serums von tumorerkrankten Personen.

Da die Fluoreszenzlöschung in ihrer Anwendung auf Sera eine Wellenlängenabhängigkeit zeigt (das Verhältnis von $I_o/I_L$ ist nur in erster Näherung für alle Wellenlängen konstant), ergibt sich die Möglichkeit, daß anstelle der Absolutintensität der Fluoreszenz, welche sehr anfällig gegenüber Verdünnungsfehlern ist, ein Quotient zu einer Aussage herangezogen wird. Am einfachsten geschieht dies dadurch, daß man den Quotienten zweier Lichtintensitäten $I_x$ und $I_y$ bzw. $I_x'$ und $I_y'$ bei zwei verschiedenen Emissionswellenlängen, z.B. 350 und 380nm od. 350 und 320 nm, in Abwesenheit und in Gegenwart einer Löschsubstanz bestimmt, und daß beispielsweise die Differenz der Quotienten für eine Bestimmung des Serums herangezogen wird. Vorteilhafterweise wird bei der Messung bei zwei analytischen Wellenlängen auch eine weitere Fehlerquelle vermieden, nämlich die, daß der Löscher einen sogenannten inneren Filtereffekt aufweist und selbst in geringen Mengen das Anregungslicht absorbiert.

Von Vorteil bei der Erfindung ist es, wenn Iodidionen als dynamische Fluoreszenzlöscher eingesetzt werden. Außerdem sind auch Acrylamid, molekularer Sauerstoff und einige andere Moleküle in der Lage, die Fluoreszenz des proteingebundenen Tryptophans in reversibler Weise zu vermindern.

Meßtechnisch kann man zur Ausnützung dieses Effektes so vorgehen, daß man das Tumorserum einmal in Anwesenheit und einmal in Abwesenheit von z.B. 0,1 mol/l Kaliumiodid vermißt und die beiden Fluoreszenzintensitäten bei 337 nm vergleicht.

Es kann auch im Zusammenhang mit der Signalausbeute von Vorteil sein, daß das Serum vor der Messung verdünnt wird, beispielsweise mit Wasser, mit einem Faktor 200-1000.

Eine weitere Möglichkeit das Meßergebnis qualitativ und quantitativ zu verbessern, ist in Weiterbildung der Erfindung dadurch gegeben, daß Albumin- oder Globulin-Subfraktionen des Serums zur Messung herangezogen werden. Diese können durch bekannte Methoden aus dem Serum isoliert werden, beispielsweise durch Elektrophorese oder Chromatographie und gelöst in Wasser in einer Konzentration von beispielsweise 0,1-0,3 mg/ml der Messung zugeführt werden.

Eine vorteilhafte Ausgestaltung der Erfindung liegt vor, wenn die Messung bei zwei verschiedenen Anregungswellenlängen, vorzugsweise bei 287 und 295 nm erfolgt und die Fluoreszenzintensität bei drei verschiedenen Wellenlängen, vorzugsweise bei 325, 337 und 365 nm gemessen wird. Die größte Genauigkeit bei der Drei-Wellenlängenmessung läßt sich durch Verwendung von zwei verschiedenen Anregungswellenlängen erreichen. Um eine Probe nun bei zwei Anregungswellenlängen gleichzeitig vermessen zu können, benötigt man für jede Anregungswellenlänge eine Meßküvette. Gemessen werden im einen Fall $I_o$ bzw. $I_x$ im langwelligen Bereich, sowie im zweiten Fall $I_o'$ bzw. $I_y'$ im kurzwelligen Bereich. Das Verhältnis $I_x/I_o$ darf dabei einen gewissen Mindestwert und gleichzeitig das Verhältnis $I_y'/I_o'$ einen gewissen Maximalwert erreichen. Diese Werte werden bei Sera von Patienten mit neoplastischen Erkrankungen unter- bzw. überschritten.

Die für die Anregung benötigte Wellenlänge kann entweder durch eine in diesem Bereich emittierende Lichtquelle oder durch ein Filter realisiert werden.

Zweckmäßigerweise kann man für jede Wellenlängenkombination, bestehend aus Anregungswellenlänge und zu messender Emissionswellenlänge, einen eigenen Lichtleiter mit einem typischen Durchmesser von 100 bis 150 Mikrometer verwenden. Das induzierte Fluoreszenzlicht wird mit Hilfe eines Strahlteilers der entsprechenden Meßeinrichtung zugeführt. Es ist auch möglich, in nur eine optische Fiber mehrere Wellenlängen, z.B. mit Hilfe eines sich drehenden Filterrades, sukzessive einzukoppeln.

Um optische und mechanische Störungen durch größere Blutbestandteile (z.B. Erythrozyten) bei Vollblutmessungen zu vermeiden, ist es vorteilhaft, das Ende des Lichtleiters mit einer dünnen protein-permeablen, den Probenraum umschließenden Membran zu bedecken. Dies erlaubt zwar den Zutritt von Proteinen, verhindert aber das Eindringen der Erythrozyten. Als ideales Material für diesen Zweck kann man Zellulose-Membranen ansehen.

Aus folgenden Gründen kann es zweckmäßig sein, den Probenraum mit Wasser zu füllen: Erstens wird das eindringende Serum dadurch verdünnt, sodaß die bei unverdünnten Sera auftretenden inneren Filtereffekte entfallen können. Auftretende Konzentrationsgradienten sind wegen der kurzen Meßzeit (ca. 2s) vernachlässigbar. Zweitens wird dadurch die Gefahr der Einbringung von Luftblasen in das Untersuchungsmaterial (z.B. Blut) herabgesetzt.

Weitere Merkmale und Vorteile der Erfindung sind nachstehend anhand von in der Zeichnung dargestellten Ausführungsbeispielen, sowie Diagramme näher erläutert.

Es zeigen:

Fig. 1 bis 3 Diagramme von Fluoreszenzspektren,

Fig. 4 bis 8 verschiedene Vorrichtungen zur Durchführung des Verfahrens in schematischer Darstellung, und

Fig. 9 ein Detail aus Fig. 8 in vergrößertem Maßstab.

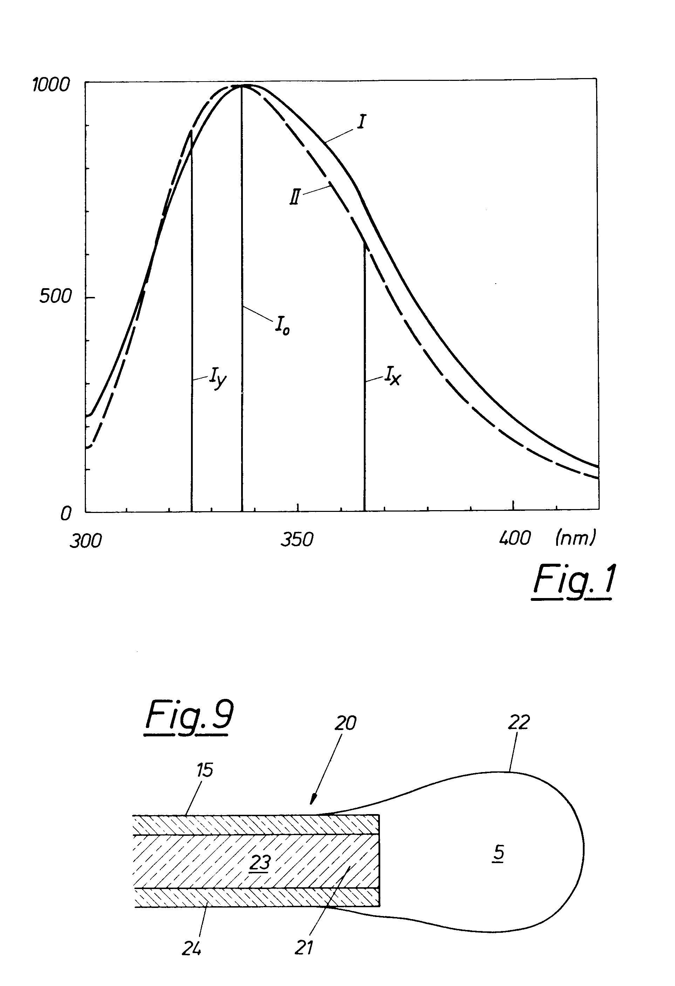

In den in Fig. 1 bis 3 dargestellten Diagrammen ist auf der Abszisse die Wellenlänge in nm und auf der Ordinate die Intensität aufgetragen.

In Fig. 1 ist ein normiertes Fluoreszenzspektrum I eines Humanserums als durchgezogene Linie dargestellt. Es wurde bei einer Anregungswellenlänge von 287 nm erhalten und zeigt ein Emissionsmaximum bei 337 nm, welches überwiegend von protein-gebundenen Tryptophan (Trp) herrührt. Die Bande erstreckt sich über den gesamten UV-Bereich und zum Teil in den sichtbaren Bereich. Dies ist mit ein Grund für die bläulich-grüne natürliche Fluoreszenz des Serums.

Daneben wird gefunden, daß sich bei einem Fluoreszenzspektrum II eines Tumorserums eine spektrale Verschiebung des Fluoreszenzmaximums ergibt. Dies ist aus der strichlierten Kurve in Fig. 1 ersichtlich, welche, wieder in normierter Form, das Emissionsspektrum des Serums einer Patientin mit einem gynäkologischen Tumor zeigt. Mit $I_o$ ist die Intensität im Emissionsmaximum bezeichnet, mit $I_x$ bzw. $I_y$ jene im langwelligen (365 nm) bzw. im kurzwelligen (325 nm) Bereich des Fluoreszenzspektrums II eines Tumorserums. Deutlich ist ein Unter- bzw. Überschreiten der Werte im Bezug auf das Fluoreszenzspektrum I eines Normalserums zu sehen.

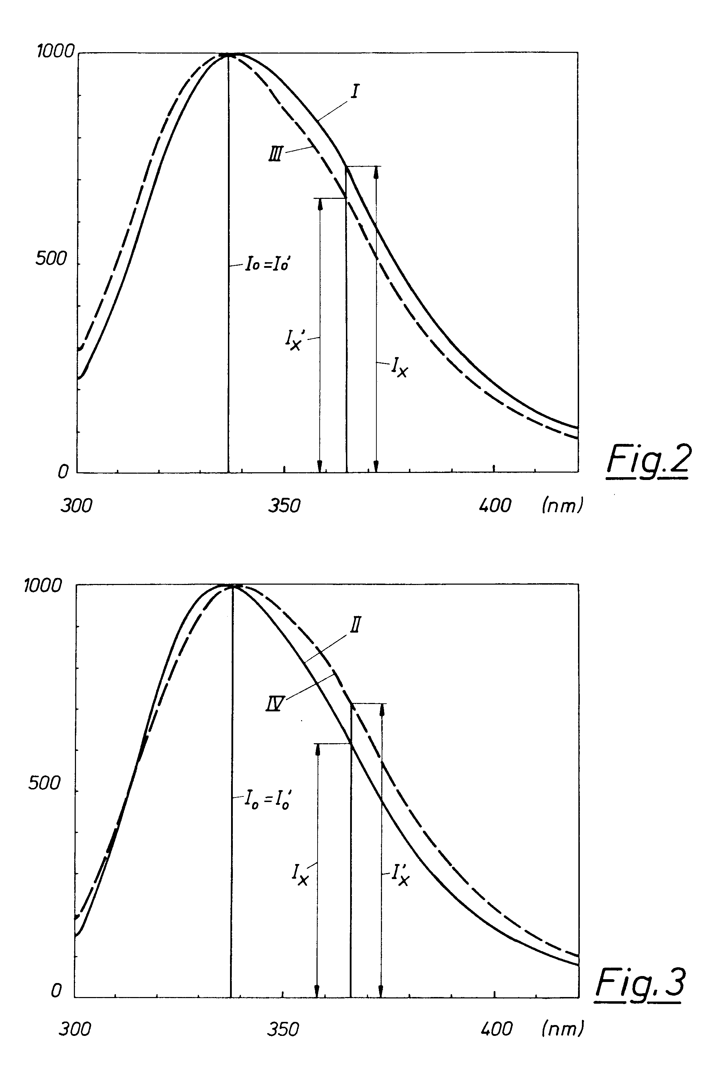

Fig. 2 zeigt typische normierte Fluoreszenzspektren eines Normalserums, einmal, gekennzeichnet mit I bei physiologischem pH-Wert (7,4) und dann, bezeichnet mit III, in 0,1-molarer Salzsäure. Es tritt somit bei Normalsera eine deutliche Blauverschiebung bei Messung im stark sauren Bereich auf.

Dagegen werden in Fig. 3 normierte Fluoreszenzspektren eines Tumorserums gezeigt, wobei das Spektrum II bei einem pH-Wert von 7,4 und das Spektrum IV in 0,1-molarer Salzsäure gemessen wurde. Das Trp-Emissionsmaximum der Sera von Patienten mit Malignomen ist gegenüber solchen gesunder Personen in saurer Lösung rotverschoben. Gemessen werden die Intensitäten sowohl im Emissionsmaximum $I_o$ bzw. $I_o'$ als auch im langwelligen Bereich bei 365 nm $I_x$ bzw. $I_x'$ , Die gestrichenen Werte werden bei saurem pH-Wert gemessen.

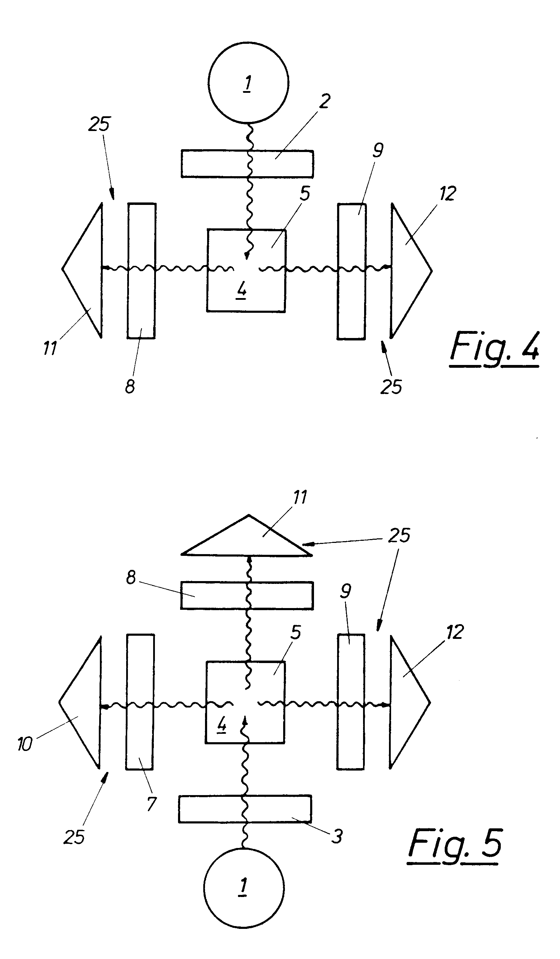

Die gleichzeitige Bestimmung der Fluoreszenzintensität bei zwei verschiedenen Wellenlängen kann in einer Anordnung erfolgen, wie sie in Fig. 4 skizziert ist. Hier fällt das Licht aus einer Lichtquelle 1 durch ein Lichtfilter 2 auf eine Probe 4 (z.B. Serum oder Proteinfraktion in starker Verdünnung) in einen sowohl für die Anregungs- als auch für die Emissionsstrahlung durchlässigen Probenraum 5. Bei einem Bedarf von typischerweise 2ml Probenlösung errechnet sich ein Bedarf an Serum von 2 - 10 Mikrolitern oder 0,2 bis 0,6 mg Albumin- oder Globulin-Fraktion). Das Fluoreszenzlicht wird aus dem Probenraum 5 nach allen Richtungen des Raums emittiert und mit Hilfe von zwei Meßeinrichtungen 25 bestehend aus optischen Filtern 8, 9 und zwei Lichtdetektoren 11, 12, bei zwei Wellenlängen gleichzeitig bestimmt.

Das eine optische Filter 8 ist durchlässig für Licht der Wellenlänge 337 nm und vorzugsweise ein Interferenzfilter. Das andere Filter 9 kann ein Interferenzfilter oder ein Steilkantenfilter sein und läßt vorzugsweise Licht der Wellenlänge über 340 nm durch.

Die Lichtintensität wird mit Hilfe der Photodetektoren 11 und 12 gemessen, welche z.B. ein Photoverstärker auf SEV-Basis, eine Photodiode, oder ein Phototransistor sein können. Die resultierenden elektrischen Signale werden nun einer nicht weiter dargestellten Auswerteeinheit zugeführt und dort dividiert.

Das Verhältnis der beiden Lichtintensitäten ist geräteabhängig und wird unter anderem durch die spektralen Eigenschaften der Filter 8, 9 sowie der spektralen Empfindlichkeit der Photoverstärker beeinflußt. Bei dem Gerät SPF 500 der Marke Aminco beträgt der Quotient der Intensitäten bei 365 und 337 nm für das Normalserum 0,714 +/-0,008 bei einer Mittelung aus 20 Proben.

Die gleichzeitige Bestimmung der Fluoreszenzintensität bei drei verschiedenen Wellenlängen kann in einer Anordnung erfolgen, wie sie in Fig. 5 skizziert ist. Hierbei fällt Licht aus der Lichtquelle 1 durch ein Lichtfilter 3, welches nur für Licht der Wellenlänge von typischerweise 295 nm durchlässig ist, auf die Probe 4. Die Intensität des Emissionslichtes wird nun bei drei verschiedenen Wellenlängen gemessen und zwar bei 365 nm eine Intensität $I_x$ (Lichtfilter 9 und Detektor 12), bei 337 nm eine Intensität $I_o$ (Lichtfilter 8 und Detektor 11) und bei 325 nm eine Intensität $I_y$ (Lichtfilter 7 und Detektor 10).

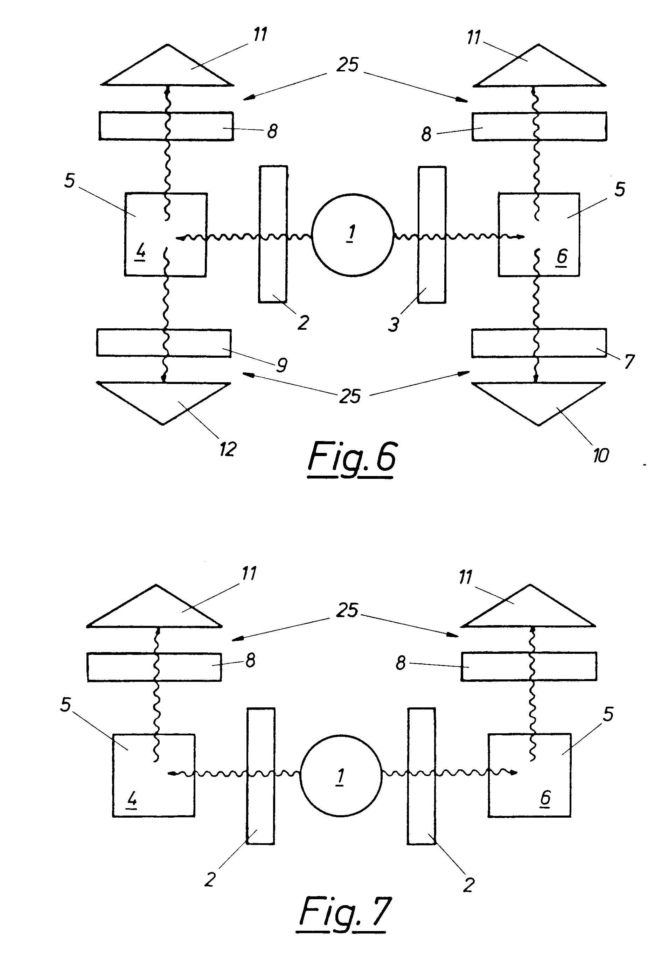

Mit Hilfe der in Fig. 6 gezeigten Vorrichtung ist es möglich bei zwei Anregungswellenlängen zu messen, wozu zwei Probenräume 5 vorhanden sind. Hierbei werden die Proben 4, 6 in die Probenräume 5 gefüllt. Aus der Lichtquelle 1 fällt das Anregungslicht durch das Lichtfilter 2, welches für Licht der Wellenlänge 287 nm durchlässig ist, auf die Probe 4 und Anregungslicht der Wellenlänge 295 nm durch ein Filter 3 auf die Probe 6. Die Intensität des Emissionslichtes wird nun bei drei verschiedenen Emissionswellenlängen gemessen und zwar bei jeder der Proben 4 und 6 bei 337 nm mit einem Lichtfilter 8 und einem Detektor 11 die Fluoreszenzintensitäten $I_o$ und $I_o'$ ` Die Lichtfilter 9 und 7 sind durchlässig für Licht der Wellenlänge 365 bzw. 325 nm, wobei die Fluoreszenzintensitäten $I_x$ bzw. $I_y$ an den Detektoren 12 bzw. 10 gemessen werden.

Es muß angeführt werden, daß die angegebenen analytischen Wellenlängen gerätespezifisch sind und durch die spektrale Charakteristik der Lichtquelle und des Photoverstärkers bestimmt werden. Bei Verwendung anderer Bauteile als in der genannten Vorrichtung, in welcher z.B. eine Deuteriumlampe als Lichtquelle und ein Photomultiplier als Detektor dienen, sind geringfügige Abweichungen bei den Wellenlängen zu erwarten, bei welchen maximale Änderungen gegenüber den Normalsera auftreten.

Mit der in Fig. 6 gezeigten Vorrichtung ist es auch möglich, gleichzeitig bei neutralem und saurem pH-Wert zu messen. Dabei muß jedoch das Anregungsfilter 3 durch ein Filter 2 ersetzt werden, sowie das Emissionsfilter 7 durch Filter 9 und Detektor 10 durch Detektor 12. Das Licht aus der Lichtquelle 1 fällt dann durch die Lichtfilter 2 auf eine saure 6 bzw. eine neutrale Probe 4. Das Fluoreszenzlicht wird aus beiden Probenräumen nach allen Richtungen emittiert und trifft auf die optischen Filter 8 bzw. 9. Die Fluoreszenzintensität wird mit je zwei Lichtdetektoren 11 bzw. 12 bei zwei Wellenlängen gleichzeitig bestimmt. Die optischen Filter 8 sind wieder durchlässig für Licht der Wellenlänge 337 nm und liefern die Fluoreszenzintensitäten $I_o$ und $I_o'$, die optischen Filter 9 für Licht der Wellenlänge 365 nm und liefern die Fluoreszenzintensitäten $I_x$ und $I_x'$.

In Fig. 7 ist eine Vorrichtung dargestellt, welche die Messung mittels Fluoreszenzlöscher-Methode bei einer analytischen Wellenlänge zeigt. Aus der Lichtquelle 1 fällt das Anregungslicht durch zwei Lichtfilter 2 auf die in den Probenräumen 5 befindlichen Proben 4, 6. Probe 4 enthält verdünntes Serum, Probe 6 gleich verdünntes Serum und den Löscherzusatz. Aus den beiden Proben 4, 6 breitet sich die Fluoreszenzstrahlung nach allen Richtungen aus. Die Fluoreszenzintensität der beiden Proben werden bei den Emissionswellenlängen 337 nm (oder langwelliger) mit Hilfe eines geeigneten optischen Filters bestimmt und in einer Divisionseinheit in Beziehung gesetzt. Der Quotient $I_L/I_o$ wird im Fall eines Serums einer tumorkranken Person höher liegen als der entsprechende Quotient, bestimmt an einem Standard.

Zur Messung bei zwei analytischen Wellenlängen bedient man sich einer Meßanordnung nach Fig. 6, in welcher das Licht aus einer Lichtquelle 1 auf die beiden Proben 4, 6 fällt, deren jeweilige Fluoreszenz bei den analytischen Wellenlängen mit Hilfe jeweils zweier optischer Filter und zweier Photodetektoren bestimmt wird.

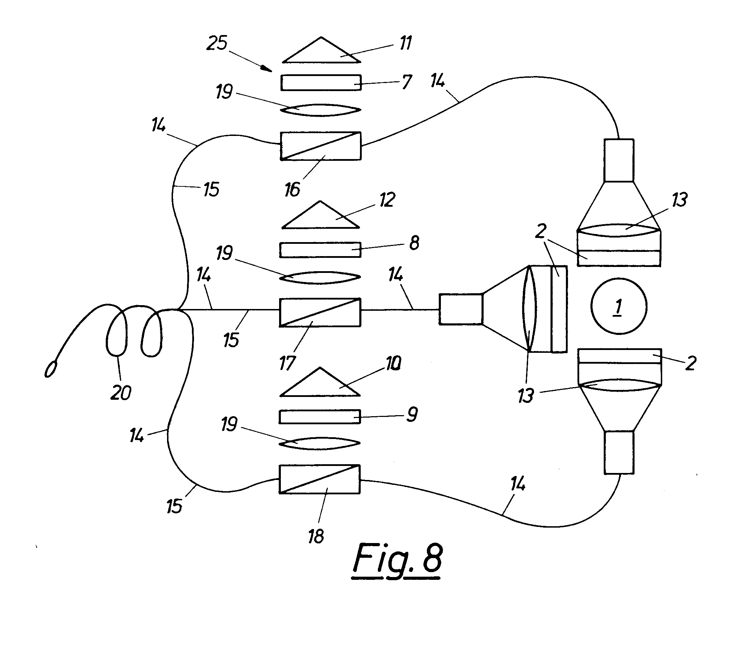

Fig. 8 zeigt eine in Anlehnung zu Fig. 5 gewählte Anordnung. Aus einer UV-Lichtquelle 1 wird Licht der Wellenlänge 290 bis 295 nm nach Passieren der Filter 2 mittels Linsen 13 in Lichtleiter 14 eingekoppelt. Die Lichtleiter 14 bringen das Anregungslicht an den Meßort. Das induzierte Fluoreszenzlicht gelangt über Lichtleiter 15 zu den Meßeinrichtungen zurück. Es ist auch möglich, wie in Fig. 8 dargestellt, das Anregungs- und das Fluoreszenzlicht für jede zu messende Emissionswellenlänge in einem Lichtleiter zu leiten und das Fluoreszenzlicht jeweils mit Hilfe eines dichroitischen Spiegels oder eines Strahlteilers 16, 17 18 auf eine der Linsen 19 zu lenken. Nach Passieren der Filter 7, 8 und 9 eingestellt auf 325, 337 und 365 nm in den einzelnen Meßeinrichtungen 25, wird die jeweilige Intensität I bestimmt und wie früher beschrieben ausgewertet. Die Enden der Lichtleiter 15 werden vorzugsweise zu einem katheterförmigen Bündel 20 zusammengefaßt. Der Lichtquelle 1 kann zur Kompensation von Intensitätsschwankungen ein Referenzphotodetektor zugeordnet werden.

Fig. 9 zeigt das Ende 21 eines Lichtleiters 15 aus einem katheterförmigen Bündel 20 mit einer ballonförmigen Zellulosemembran 22, welche das Eindringen von zellulären Bestandteilen in den Probenraum 5 verhindert, während hingegen Blutserum eindiffundieren kann, 23 und 24 sind Kern und Mantel des Lichtleiters 15.

**Patentansprüche**

1. Verfahren zur Tumordiagnose mittels Sera, wobei das zu untersuchende Serum in-vitro mit Anregungsstrahlung beaufschlagt und die Fluoreszenzintensität des Serums gemessen wird, **dadurch gekennzeichnet**, daß Anregungsstrahlung zumindest einer Wellenlänge zwischen 250 und 300 nm verwendet wird, daß die Fluoreszenzintensität bei vorbestimmten Emissionswellenlängen gemessen wird, sowie daß Abweichungen dieser Meßwerte von jenen eines Standards oder Standardserums festgestellt werden und daraus auf das Vorliegen neoplastischer Erkrankungen geschlossen wird.

2. Verfahren nach Anspruch 1, dadurch gekennzeichnet, daß die Fluoreszenzintensität des zu untersuchenden Serums bei einer Emissionswellenlänge von über 340 nm gemessen, normiert und mit der Fluoreszenzintensität eines Standards oder Standardserums verglichen wird und daß aus einer Abnahme der normierten Fluoreszenzintensität auf das Vorliegen neoplastischer Erkrankungen geschlossen wird.

3. Verfahren nach Anspruch 1 und 2, dadurch gekennzeichnet, daß die Fluoreszenzintensität des zu untersuchenden Serums zusätzlich bei einer Emissionswellenlänge zwischen 320 und 330 nm gemessen, normiert und mit der Fluoreszenzintensität eines Standardserums verglichen wird und daß aus der Zunahme der normierten Fluoreszenzintensität auf das Vorliegen neoplastischer Erkrankungen geschlossen wird.

4. Verfahren nach Anspruch 1, dadurch gekennzeichnet, daß die Fluoreszenzintensität des zu untersuchenden Serums sowohl in physiologischer als auch in saurer Lösung von pH-Werten unter 4 gemessen und normiert wird und daß aus der Differenz oder dem Verhältnis der normierten Meßwerte auf das Vorliegen neoplastischer Erkrankungen geschlossen wird.

5. Verfahren nach Anspruch 1, dadurch gekennzeichnet, daß die Fluoreszenzintensität des zu untersuchenden Serums bei mindestens einer Emissionswellenlänge in Gegenwart und in Abwesenheit eines dynamischen Fluoreszenzlöschers bestimmt wird und daß aus der Differenz oder dem Verhältnis der Meßwerte auf das Vorliegen neoplastischer Erkrankungen geschlossen wird.

6. Verfahren nach Anspruch 5, dadurch gekennzeichnet, daß Iodidionen als dynamische Fluoreszenzlöscher eingesetzt werden.

7. Verfahren nach einem der Ansprüche 1 bis 6, dadurch gekennzeichnet, daß Albumin- oder Globulin-Subfraktionen des Serums zur Messung herangezogen werden.

8. Verfahren nach einem der Ansprüche 1 bis 7, dadurch gekennzeichnet, daß das Serum vor der Messung verdünnt wird.

9. Verfahren nach einem der Ansprüche 1 bis 8, dadurch gekennzeichnet, daß die Messung bei zwei verschiedenen Anregungswellenlängen, vorzugsweise bei 287 und 295 nm erfolgt und daß die Fluoreszenzintensität bei drei verschiedenen Wellenlängen, vorzugsweise bei 325, 337 und 365 nm gemessen wird.

**Claims**

1. A method for the diagnosis of tumors by means of sera, the serum to be tested being treated with activation radiation in vitro and the fluorescence intensity of the serum being measured, **wherein** activation radiation of at least one wavelength of 250 to 300 nm is used, and wherein the fluorescence intensity is measured at given emission wavelengths, and wherein deviations of the values measured from those of a standard or standard serum are determined and used for indicating the presence of neoplastic diseases.

2. A method according to claim 1, wherein the fluorescence intensity of the serum to be tested is measured at an emission wavelength greater than 340 nm, and is then standardized and compared to the fluorescence intensity of a standard or standard serum, and wherein a decrease of standardized fluorescence intensity is used for indicating the presence of neoplastic diseases.

3. A method according to claims 1 and 2, wherein the fluorescence intensity of the serum to be tested is additionally measured at an emission wavelength of 320 to 330 nm, and is then standardized and compared to the fluorescence intensity of a standard serum, and wherein an increase in standardized fluorescence intensity is used for indicating the presence of neoplastic diseases.

4. A method according to claim 1, wherein the fluorescence intensity of the serum to be tested is measured both in physiological solution and in acid solution with pH values smaller than 4, and is then standardized, and wherein the difference or the ratio of standardized measured values is used for indicating the presence of neoplastic diseases.

5. A method according to claim 1, wherein the fluorescence intensity of the serum to be tested is determined at one or more emission wavelengths in the presence and in the absence of a dynamic fluorescence quencher, and wherein the difference or the ratio of the measured values is used for indicating the presence of neoplastic diseases.

6. A method according to claim 5, wherein iodide ions are used as dynamic fluorescence quenchers.

7. A method according to any of claims 1 to 6, wherein albumin or globulin subfractions of the serum are used for measurement.

8. A method according to any of claims 1 to 7, wherein the serum is diluted prior to measurement.

9. A method according to any of claims 1 to 8, wherein measuring takes place at two different activation wavelengths, preferably at 287 and 295 nm, and wherein fluorescence intensity is measured at three different wavelengths, preferably at 325, 337, 365 nm.

**Revendications**

1. Procédé pour le diagnostic des tumeurs au moyen de sérums, procédé dans lequel le sérum à examiner est soumis in-vitro à un rayonnement d'excitation et l'intensité de la fluorescence du sérum est mesurée, procédé caractérisé en ce qu'on utilise un rayonnement d'excitation ayant au moins une longueur d'onde comprise entre 250 et 300 nm, en ce qu'on mesure l'intensité de la fluorescence du sérum pour des longueurs d'ondes d'émission prédéterminées, et que les écarts entre ces valeurs de mesure et celles d'un standard ou d'un sérum standard, sont constatés et qu'on en tire des conclusions en ce qui concerne la présence d'affections néoplasiques.

2. Procédé selon la revendication 1, caractérisé en ce que l'intensité de la fluorescence du sérum à examiner est mesurée pour une longueur d'onde d'émission supérieure à 340 nm, normalisée, et comparée avec l'intensité de fluorescence d'un standard ou d'un sérum standard, et qu'à partir d'une dégradation de l'intensité de fluorescence normalisée, on conclut à la présence d'affections néoplasiques.

3. Procédé selon les revendications 1 et 2, caractérisé en ce que l'intensité de fluorescence du sérum à examiner est, en outre, mesurée pour une longueur d'onde d'émission se situant entre 320 et 330 nm, normalisée, et comparée avec l'intensité de fluorescence d'un sérum standard, et que de l'accroissement de l'intensité de la fluorescence normalisée, on conclut à la présence d'affections néoplasiques.

4. Procédé selon la revendication 1, caractérisé en ce que l'intensité de fluorescence du sérum à examiner, est mesurée aussi bien dans une solution physiologique qu'également dans une solution acide de valeur de pH inférieure à 4, et est normalisée et, qu'à partir de la différence ou bien du rapport des valeurs de mesure normalisées, on conclut à la présence d'affections néoplasiques.

5. Procédé selon la revendication 1, caractérisé en ce que l'intensité de fluorescence du sérum à examiner est déterminée pour au moins une longueur d'onde d'émission en la présence et en l'absence d'un extincteur dynamique de fluorescence, et qu'à partir de la différence ou bien du rapport des valeurs de mesure, on conclut à la présence d'affections néoplasiques.

6. Procédé selon la revendication 5, caractérisé en ce qu'on met en oeuvre comme extincteur dynamique de fluorescence, des ions iodures.

7. Procédé selon une des revendications 1 à 6, caractérisé en ce qu'il est fait appel pour la mesure, aux sous-fractions albumine ou globuline du sérum.

8. Procédé selon une des revendications 1 à 7, caractérisé en ce que le sérum est dilué avant la mesure.

9. Procédé selon une des revendications 1 à 8, caractérisé en ce que la mesure s'effectue pour deux longueurs d'onde d'excitation différentes, de préférence pour 287 et 295 nm et que l'intensité de fluorescence est mesurée pour trois longueurs d'onde différentes, de préférence pour 325, 337 et 365 nm.

_Fig.1_

_Fig.9_

_Fig.2_

_Fig.3_

_Fig. 4_

_Fig. 5_

_Fig.6_

_Fig.7_

*Fig.8*